# EUROPEAN PATENT APPLICATION

(11) **EP 4 772 581 A1**
(43) Date of publication of application: **08.07.2026**
(21) Application number: 24858450.0
(22) Date of filing: 23.08.2024
(51) Int. Cl.: C08L 83/04, C08G 77/12

(54) **SILICONE COMPOSITION, AND PREPARATION METHOD THEREFOR AND USE THEREOF**

(30) Priority: 30.08.2023 CN 202311108858
(71) Applicant: Momentive Performance Materials Inc., Niskayuna, NY 12309 (US)
(72) Inventor: XIA, Xuhui, Shanghai 201203 (CN); CAO, Weiqiang, Shanghai 201203 (CN); PAN, Shan, Shanghai 201203 (CN); ZHU, Tao, Shanghai 201203 (CN)
(74) Representative: Gille Hrabal Partnerschaftsgesellschaft mbB Patentanwälte
(86) International application number: PCT/CN2024/114076
(87) International publication number: WO 2025/044909

(57) **Abstract**

The present invention relates to a silicone composition, and a preparation method therefor and a use thereof. The silicone composition comprises: (A) a silicone gel, which is obtained by carrying out hydrosilylation action on at least one first polyorganosiloxane having Si-H and at least one second polyorganosiloxane having an ethylenically unsaturated group at the molar ratio of less than 1 of Si-H of the first polyorganosiloxane to the ethylenically unsaturated group of the second polyorganosiloxane in the presence of a hydrosilylation catalyst; (B) at least one silicon-containing compound selected from the following: (B-1) third polyorganosiloxane having at least one of Si-H and an alkoxy functional group, and (B-2) alkoxysilane; (C) a thermally conductive filler; and (D) optionally, one or more auxiliary additives.

## Description

### Technical field

The present invention relates to a silicone composition, a method for its preparation, and a thermal interface material and an apparatus using it, and a method for dissipating heat from a substrate. In particular, the silicone composition of the present invention uses a silicone gel, and a silane or a siloxane having Si-H and/or alkoxy functional groups, which enables the thermal interface material prepared therefrom to withstand long-term high temperature conditions and repeated thermal shocks, thereby providing excellent long-term reliability.

### Background

In modern electronic apparatuses, thermal interface materials are often used to fill the interface between a heat-generating component and a heat sink to improve the heat dissipation performance of an electronic apparatus. As such thermal interface materials, curable thermally conductive silicones and non-curable thermally conductive silicone greases are commonly used. Thermally conductive silicones are typically consisted of a vinyl functional polysiloxane, a polysiloxane having Si-H, a noble metal catalyst, and a thermally conductive filler. Thermally conductive silicone does not suffer from problems such as pump-out and migration, but its thermal conductivity is lower than that of a thermally conductive silicone grease, and its applications are limited due to typical requirements for thermal curing. Thermally conductive silicone greases are typically consisted of thermally conductive fillers with different size distributions, agents for treating fillers, and organopolysiloxanes. However, the inherent properties of thermally conductive silicone grease materials make them prone to be pumped out, cracked after drying, and slid in vertical direction after prolonged exposure to high temperature conditions (such as a temperature above 150°C) or repeated exposure to thermal shock conditions (such as a severe temperature change from -40°C to 150°C), thereby causing material migration, contamination of electronic apparatuses, or even causing short circuits.

Therefore, there remains a need for thermal interface materials with long-term reliability that do not require thermal curing and can withstand long-term high temperature conditions and repeated thermal shocks.

### Summary

In one aspect, the present invention provides a silicone composition comprising: (A) a silicone gel, which is prepared by subjecting at least one first polyorganosiloxane having Si-H and at least one second polyorganosiloxane having an ethylenically unsaturated group, in such a ratio that the molar ratio of Si-H of the first polyorganosiloxane to the ethylenically unsaturated group of the second polyorganosiloxane is less than 1, to hydrosilylation reaction in the presence of a hydrosilylation catalyst; (B) at least one silicon-containing compound selected from: (B-1) a third polyorganosiloxane having at least one of Si-H and alkoxy functional groups, and (B-2) an alkoxysilane; (C) a thermally conductive filler; and (D) optionally, one or more auxiliary additives.

In another aspect, the present invention provides a method for preparing the silicone composition, including: (a) subjecting the first polyorganosiloxane and the second polyorganosiloxane, in such a ratio that the molar ratio of Si-H of the first polyorganosiloxane to the ethylenically unsaturated group of the second polyorganosiloxane is less than 1, to hydrosilylation reaction in the presence of the hydrosilylation catalyst to prepare the silicone gel (A); and (b) directly blending the prepared silicone gel (A) with component (B), component (C) and optional component (D) to prepare the silicone composition.

In yet another aspect, the present invention provides a thermal interface material comprising the silicone composition according to the above aspects.

In another aspect, the present invention provides an apparatus including a first substrate, a second substrate, and the thermal interface material bridging an interface between the first substrate and the second substrate. The thermal interface material is the one according to the above aspects.

In yet another aspect, the present invention provides a method for preparing the apparatus, including applying the silicone composition to at least one of the first substrate and the second substrate.

In another aspect, the invention provides a method for dissipating heat from a substrate, including contacting the thermal interface material with the substrate.

The silicone composition according to the present invention is a thermally conductive silicone grease in a fluid state, and thus is easily filled in gaps between different substrates to be an excellent thermal interface material. The silicone composition can exert its heat dissipation effect without thermal curing after being applied to the surface of a heat-generating component that requires heat dissipation. At the same time, the silicone composition, which is applied to the surface of the heat-generating component, undergoes cross-linking and/or condensation reaction under the action of heat released from the heat-generating component, to enable the thermal interface material prepared therefrom to withstand long-term high temperature conditions and repeated thermal shocks, thereby providing excellent long-term reliability. In some preferred embodiments, the thermal interface material prepared using the silicone composition according to the present invention is capable of withstanding an elevated temperature of 150°C for more than 1,000 hours. In other preferred embodiments, the thermal interface material is capable of withstanding at least 500, and even more than 1,000 thermal cycling shocks from -40°C to 150°C.

### Description of figures

FIG. 1 is a graph showing accelerated aging evaluation results of Example samples EX1, EX2, and EX3. In FIG. 1 and the accompanying figures described later, the upper row of the figures all show the results of samples after being subjected to 150°C for 1,000 hours, and the lower row of the figures all show the results of samples after being subjected to a thermal cycling shock from -40°C to 150°C for 1,000 times.
FIG. 2 is a graph showing accelerated aging evaluation results of Example samples EX4, EX5, and EX6.
FIG. 3 is a graph showing accelerated aging evaluation results of Example samples EX7, EX8, and EX9.
FIG. 4 is a graph showing accelerated aging evaluation results of samples CE1 and CE2 for comparative examples.
FIG. 5 is a graph showing accelerated aging evaluation results of samples CE3, CE4, and CE5 for comparative examples.
FIG. 6 is a graph showing accelerated aging evaluation results of Example samples EX10 and EX11.
FIG. 7 is a graph showing accelerated aging evaluation results of samples CE6, CE7, and CE8 for comparative examples.

### Detailed description

In the specification and claims herein, the following terms and expressions are to be understood as indicated.

The singular forms "a", 'an", and "the" encompass the plurals, and reference to a particular numerical value includes at least that particular numerical value, unless the context clearly dictates otherwise.

Use of any and all examples, or exemplary languages (e.g., "such as") as provided herein is intended merely to better illustrate the present invention and does not impose a limitation on the scope of the present invention, unless otherwise claimed.

No language in the specification should be construed as specifying any unclaimed element as essential to the practice of the present invention.

The terms "comprising", "including", "containing", and grammatical equivalents thereof are inclusive or open-ended terms that do not exclude additional unrecited elements or method steps, but are also to be understood to include the more restrictive terms "consisting of" and "consisting essentially of".

Except in the working examples or where otherwise indicated, all numbers representing amounts of materials, temperatures, durations, quantitative properties of materials and the like as stated in the specification and claims are to be understood as being modified in all instances by the term "about", whether or not the term "about" is used in the expressions.

It will be understood that any numerical range as recited herein includes all subranges within that range and any combination of different endpoints of such ranges or subranges.

It will also be understood that any compound, material, or substance explicitly or implicitly disclosed in the specification and/or recited in the claims as belonging to a group of structurally, compositionally, and/or functionally related compounds, materials, or substances includes individual representatives of the group and all combinations thereof.

The term "hydrocarbon group" means any hydrocarbon (saturated or unsaturated, aliphatic or aromatic, acyclic or cyclic) from which one or more hydrogen atoms have been removed; and denotes any of alkyl, alkenyl, alkynyl, cycloalkyl, cycloalkenyl, cycloalkynyl, aryl, aralkyl and alkylaryl groups which can optionally contain one or more heteroatoms. In one embodiment, said hydrocarbon group may contain up to about 20 carbon atoms, and in another embodiment up to about 16 carbon atoms.

The term "alkyl" means any monovalent, saturated linear, branched or cyclic hydrocarbon group. Examples of alkyl include methyl, ethyl, propyl, butyl and cyclohexyl. The term "alkenyl" means any monovalent linear, branched or cyclic hydrocarbon group containing one or more carbon-carbon double bonds, wherein the attachment sites of the group can be at the carbon-carbon double bonds or other positions therein. Examples of alkenyl include vinyl, propenyl, allyl, methylallyl, and cyclohexylvinyl. The term "alkynyl" means any monovalent linear, branched or cyclic hydrocarbon group containing one or more carbon-carbon triple bonds and optionally one or more carbon-carbon double bonds, wherein the attachment sites of the group can be at the carbon-carbon triple bonds, carbon-carbon double bonds, or other positions therein. Examples of alkynyl include ethynyl, propargyl, and methylethynyl.

As used herein, the term "aryl" means any monovalent aromatic hydrocarbon group having about 6 to about 30 carbon atoms, preferably about 6 to about 20 carbon atoms, and more preferably about 6 to about 18 carbon atoms. Examples of aryl groups include phenyl and naphthyl. The term "aralkyl" means any alkyl group (as defined herein) in which one or more hydrogen atoms have been substituted by the same number of similar and/or different aryl groups (as defined herein). Examples of arylalkyl include benzyl and phenethyl. The term "alkaryl" means any aryl group (as defined herein) in which one or more hydrogen atoms have been substituted by the same number of similar and/or different alkyl groups (as defined herein). Examples of alkaryl group include tolyl and xylyl.

The term "heteroatom" means any Group 13-17 element other than carbon, and includes, for example, oxygen, nitrogen, silicon, sulfur, phosphorus, fluorine, chlorine, bromine, and iodine. In some embodiments, the heteroatom is a halogen atom selected from fluorine, chlorine, bromine, and iodine. In some embodiments, the heteroatom is oxygen, nitrogen, or sulfur.

Useful monovalent hydrocarbon group includes linear or branched alkyl groups for example methyl, ethyl, n-propyl, isopropyl, n-butyl, isobutyl, tert-butyl, n-pentyl, isopentyl, neopentyl, tert-pentyl, hexyl such as n-hexyl, heptyl group such as n-heptyl, octyl group such as n-octyl, iso-octyl and 2,2,4-trimethylpentyl, nonyl group such as n-nonyl, decyl group such as n-decyl, and cycloalkyl group such as cyclopentyl, cyclohexyl, cycloheptyl and methylcyclohexyl; alkenyl group such as linear or branched alkenyl such as vinyl, propenyl, allyl and methylallyl, and cyclic alkenyl group such as cyclohexenyl; alkynyl group such as ethynyl, propargyl and methylethynyl; aryl group such as phenyl, naphthyl; alkylaryl group such as o-, m-, and p-tolyl, xylyl; and aralkyl group such as phenethyl and benzyl.

Useful divalent hydrocarbon group includes alkylene, alkenylene, alkynylene, arylene, or any combination of two or more thereof, which can optionally contain one or more heteroatoms, such as oxygen, nitrogen, sulfur atoms, or halogen atoms. In some embodiments, the divalent hydrocarbon group can optionally contain one or more functional groups including, for example, hydroxyl, mercapto, ether, ester, amine, amide, or carboxyl groups. The divalent hydrocarbon group can contain 1 to about 20 carbon atoms, for example 1 to about 16 carbon atoms, preferably 1 to about 12 carbon atoms, and more preferably about 3 to about 10 carbon atoms.

In one aspect, the present invention provides a silicone composition comprising: (A) a silicone gel, which is prepared by subjecting at least one first polyorganosiloxane having Si-H and at least one second polyorganosiloxane having an ethylenically unsaturated group, in such a ratio that the molar ratio of Si-H of the first polyorganosiloxane to the ethylenically unsaturated group of the second polyorganosiloxane is less than 1, to hydrosilylation reaction in the presence of a hydrosilylation catalyst; (B) at least one silicon-containing compound selected from: (B-1) a third polyorganosiloxane having at least one of Si-H and alkoxy functional groups, and (B-2) an alkoxysilane; (C) a thermally conductive filler; and (D) optionally, one or more auxiliary additives.

The silicone gel according to the present invention is a pre-cured silicone gel, which is prepared under the condition that the ethylenically unsaturated group is molar excess relative to Si-H, having a low cross-linking density such that their storage modulus (G') at room temperature is typically less than about 500 Pa. In one embodiment, the storage modulus thereof is less than 300 Pa, for example about 10 to about 200 Pa, particularly about 50 to about 100 Pa. The pre-cured silicone gel has a content of residual ethylenically unsaturated group and can undergo further cross-linking reactions. The silicone composition of the present invention, by combining the silicone gel having a content of residual ethylenically unsaturated group and silane or siloxane having Si-H and/or an alkoxy functional group, enables the thermal interface material prepared therefrom to undergo cross-linking and/or condensation reaction under the action of heat released from a heat-generating component that requires heat dissipation, and thereby be tackified. As a result, the thermal interface material according to the present invention can withstand prolonged high temperature conditions and repeated thermal shocks.

Examples of ethylenically unsaturated group in the silicone gel include, but are not limited to, alkenyl and alkynyl, for example. Illustrative examples of alkenyl include, but are not limited to, vinyl, propenyl, allyl, methylallyl, and cyclohexylvinyl. Illustrative examples of alkynyl include, but are not limited to, ethynyl, propargyl, and methylethynyl. In one embodiment, the ethylenically unsaturated group is vinyl.

In a preferred embodiment, the first polyorganosiloxane has a structure of general formula (I):

m¹ₐM^{H}_{b}D¹_{c}D^{H}_{d}T¹ₑT^{H}_{f}Q_{g} general formula (I)

wherein
M¹=R¹¹R¹²R¹³SiO_{1/2};
M^{H}=R¹⁴R¹⁵HSiO_{1/2};
D¹=R¹⁶R¹⁷SiO_{2/2};
D^{H}=R¹⁸HSiO_{2/2};
T¹=R¹⁹SiO_{3/2};
T^{H}=HSiO_{3/2};
Q=SiO_{4/2}
wherein R¹¹, R¹², R¹³, R¹⁴, R¹⁵, R¹⁶, R¹⁷, R¹⁸ and R¹⁹ are each independently an optionally substituted monovalent hydrocarbon group of up to 60 carbon atoms, preferably a monovalent hydrocarbon group of 1 to 30 carbon atoms, and more preferably an alkyl group of 1 to 12 carbon atoms; and subscripts a, b, c, d, e, f and g satisfy: 0≤a≤50, 0≤b≤50, 0≤c≤500, 0≤d≤500, 0≤e≤100, 0≤f≤100, 0≤g≤30, b+d+f≥2, and a+b+c+d+e+f+g≤1000.

In a preferred embodiment, the first polyorganosiloxane is selected from the following general formula (I): wherein R¹¹, R¹², R¹³, R¹⁴, R¹⁵, R¹⁶, R¹⁷, R¹⁸ and R¹⁹ are each independently an alkyl group of 1 to 6 carbon atoms, e, f and g are 0, a+b=2, 10≤c≤200, and 10≤d≤100.

In a particularly preferred embodiment, the first polyorganosiloxane is selected from the following general formula (I): wherein R¹¹, R¹², R¹³, R¹⁴, R¹⁵, R¹⁶, R¹⁷, R¹⁸ and R¹⁹ are each independently an alkyl group of 1 to 4 carbon atoms, e, f and g are 0, a+b=2, 10≤c≤100, and 10≤d≤50.

In a preferred embodiment, the second polyorganosiloxane has a structure of the following general formula (II):

m²ₕM^{V}ᵢD²ⱼD^{V}ₖT²ₗT^{V}ₘQₙ general formula (II)

wherein
M²=R²¹R²²R²³SiO_{1/2};
M^{V}=R²⁴R²⁵R^{V}SiO_{1/2};
D²=R²⁶R²⁷SiO_{2/2};
D^{V}=R²⁸R^{V}SiO_{2/2};
T²=R²⁹SiO_{3/2};
T^{V}=R^{V}SiO_{3/2};
Q=SiO_{4/2}
wherein
wherein R²¹, R²², R²³, R²⁴, R²⁵, R²⁶, R²⁷, R²⁸ and R²⁹ are each independently an optionally substituted monovalent hydrocarbon group of up to 60 carbon atoms, preferably a monovalent hydrocarbon group of 1 to 30 carbon atoms, and more preferably an alkyl group of 1 to 12 carbon atoms; each of R^{V} is independently an ethylenically unsaturated group of 2 to 30 carbon atoms, preferably an alkenyl group or an alkynyl group of 2 to 20 carbon atoms, and more preferably an alkenyl group of 2 to 8 carbon atoms; and subscripts h, i, j, k, l, m and n satisfy: 0≤h≤50, 0≤i≤50, 0≤j≤1000, 0≤k≤1000, 0≤l≤100, 0≤m≤100, 0≤n≤30, i+k+m ≥ 2, and h+i+j+k+l+m+n≤2000.

In a preferred embodiment, the second polyorganosiloxane is selected from the following general formula (II): wherein R²¹, R²², R²³, R²⁴, R²⁵, R²⁶, R²⁷, R²⁸ and R²⁹ are each independently an alkyl group of 1 to 6 carbon atoms; each of R^{V} is independently an alkenyl group or an alkynyl group of 2 to 20 carbon atoms; and l, m and n are 0, h+i=2, 0≤k≤20, and 10≤j≤800.

In a particularly preferred embodiment, the second polyorganosiloxane is selected from the following general formula (II): wherein R²¹, R²², R²³, R²⁴, R²⁵, R²⁶, R²⁷, R²⁸ and R²⁹ are each independently an alkyl group of 1 to 4 carbon atoms; each of R^{V} is independently an alkenyl group of 2 to 8 carbon atoms; k, l, m and n are 0, i=2, and 100≤j≤500.

In an embodiment, the molar ratio of Si-H of the first polyorganosiloxane to the ethylenically unsaturated group of the second polyorganosiloxane for preparing the silicone gel is about 0.05:1 to about 0.9:1, preferably about 0.1:1 to about 0.8:1, more preferably about 0.15:1 to about 0.7:1, and in particular about 0.2:1 to about 0.5:1, such as about 0.3:1.

The hydrosilylation catalyst as used in the preparation of the silicone gel via hydrosilylation reactions are well known in the art. Illustrative examples of the hydrosilylation catalyst include, but are not limited to, noble metal-based, particularly platinum-based noble metal catalysts, such as Karstedt catalysts. The prepared silicone gel can be directly used in the formulation of thermal interface materials without purification.

The amount of the ethylenically unsaturated group in the prepared silicone gel is about 0.01 to about 0.30 mmol per 1 g of gel, preferably about 0.02 to about 0.25 mmol per 1 g of gel, and more preferably about 0.05 to about 0.20 mmol per 1 g of gel, in particular about 0.08 to about 0.15 mmol per 1 g of gel.

In embodiments, the silicone gel (A) is typically used in an amount of about 0.5 to 10 parts by weight, based on 100 parts by weight of the silicone composition. For example, the silicone gel (A) can be used in an amount of about 0.8 to about 8 parts by weight, in particular about 1 to about 5 parts by weight, such as about 2 parts by weight, about 3 parts by weight, about 4 parts by weight, or about 4.5 parts by weight, based on 100 parts by weight of the silicone composition.

In a preferred embodiment, the third polyorganosiloxane has a structure of general formula (III):

M³ₒM^{H}ₚM^{AO}_{q}D³ᵣD^{H}ₛD^{AO}ₜT³ᵤT^{H}ᵥT^{AO}_{w}Qₓ general formula (III)

wherein
M³=R³¹R³²R³³SiO_{1/2};
M^{AO}=R³⁴R³⁵R^{AO}SiO_{1/2};
D³=R³⁶R³⁷SiO_{2/2};
D^{AO}=R³⁸R^{AO}SiO_{2/2};
T¹=R³⁹SiO_{3/2};
T^{AO}=R^{AO}SiO_{3/2};
Q=SiO_{4/2}
M^{H}, D^{H} and T^{H} are the same as defined above for general formula (I),
wherein R¹⁴, R¹⁵, R¹⁸, R³¹, R³², R³³, R³⁶, R³⁷ and R³⁹ are each independently an optionally substituted monovalent hydrocarbon group of up to 60 carbon atoms, preferably a monovalent hydrocarbon group of 1 to 30 carbon atoms, and more preferably an alkyl group of 1 to 12 carbon atoms; R³⁴, R³⁵ and R³⁸ are each independently R^{AO} or an optionally substituted monovalent hydrocarbon group of up to 60 carbon atoms, preferably R^{AO} or a monovalent hydrocarbon group of 1 to 30 carbon atoms, and more preferably R^{AO} or an alkyl group of 1 to 12 carbon atoms; each of R^{AO} is independently an alkoxy of 1 to 12 carbon atoms, preferably an alkoxy of 1 to 6 carbon atoms, and more preferably an alkoxy of 1 to 4 carbon atoms; and subscripts o, p, q, r, s, t, u, v, w and x satisfy: 0≤o≤50, 0≤p≤50, 0≤q≤50, 0≤r≤500, 0≤s≤500, 0≤t≤500, 0≤u≤100, 0≤v≤100, 0≤w≤100, 0≤x≤30, p+s+v+q+t+w ≥ 2, and o+p+q+r+s+t+u+v+w+x≤1000.

In a preferred embodiment, the third polyorganosiloxane is a polyorganosiloxane having Si-H, which has for example the following general formula (III): wherein R¹⁴, R¹⁵, R¹⁸, R³¹, R³², R³³, R³⁴, R³⁵, R³⁶, R³⁷, R³⁸ and R³⁹ are each independently an alkyl group of 1 to 6 carbon atoms, q, t, u, v, w and x are 0, o+p=2, 10≤r≤200, and 10≤s≤100. In an example according to the embodiment, R¹⁴, R¹⁵, R¹⁸, R³¹, R³², R³³, R³⁴, R³⁵, R³⁶, R³⁷, R³⁸ and R³⁹ are methyl, q, t, u, v, w and x are 0, o+p=2, 10≤r≤100, and 10≤s≤50.

In another preferred embodiment, the third polyorganosiloxane is a polyorganosiloxane having an alkoxy functional group, which has for example the following general formula (III): wherein R¹⁴, R¹⁵, R¹⁸, R³¹, R³², R³³, R³⁴, R³⁶, R³⁷, R³⁸ and R³⁹ are each independently an alkyl group of 1 to 6 carbon atoms, R³⁵ and R^{AO} are alkoxy groups of 1 to 4 carbon atoms, o, p, s, t, u, v, w, and x are 0, q=2, and 10≤r≤200. In an example according to the embodiment, R¹⁴, R¹⁵, R¹⁸, R³¹, R³², R³³, R³⁴, R³⁶, R³⁷, R³⁸ and R³⁹ are methyl, o, p, s, t, u, v, w, and x are 0, q=2, and 10≤r≤100.

In a particularly preferred embodiment, the third polyorganosiloxane is selected from the following general formula (III): wherein R¹⁴, R¹⁵, R¹⁸, R³¹, R³², R³³, R³⁴, R³⁵, R³⁶, R³⁷, R³⁸ and R³⁹ are each independently an alkyl group of 1 to 4 carbon atoms such as methyl, q, t, u, v, w and x are 0, o+p=2, 10≤r≤100, and 10≤s≤50.

The third polyorganosiloxane is typically used in an amount of about 0.01 to 5 parts by weight, based on 100 parts by weight of the silicone composition. For example, the third polyorganosiloxane can be used in an amount of about 0.05 to 4 parts by weight, and in particular about 0.08 to 3 parts by weight, such as about 0.1 parts by weight, about 0.5 parts by weight, about 1 part by weight, about 1.5 parts by weight, about 2 parts by weight, about 2.5 parts by weight, or about 3 parts by weight, based on 100 parts by weight of the silicone composition.

In a preferred embodiment, the alkoxysilane has a structure of the following general formula (IV):

(X-R⁴¹)_{y}Si(R⁴²)_{z}(OR⁴³)_{4-(y+z)} general formula (IV)

wherein, X is an organic functional group;
each of R⁴¹ is independently a divalent hydrocarbon group of 1 to 12 carbon atoms optionally comprising one or more heteroatoms;
each of R⁴² is independently an alkyl of 1 to 16 carbon atoms;
each of R⁴³ is independently an alkyl of 1 to 6 carbon atoms;
subscript y is 0 or 1, subscript z is 0, 1 or 2, and y+z is 0, 1 or 2.

In a preferred embodiment, the alkoxysilane is selected from the following general formula (IV): wherein X is selected from glycidyloxy, epoxy, amino, amido, acyloxy and ureido, R⁴¹ is an alkylene of 3 to 12 carbon atoms, R⁴² is an alkyl of 1 to 12 carbon atoms, each of R⁴³ is independently an alkyl of 1 to 4 carbon atoms, subscript y is 1, and subscript z is 0 or 1.

In a particularly preferred embodiment, the alkoxysilane is selected from the following general formula (IV): wherein X is selected from glycidyloxy, epoxy, amino and amido, R⁴¹ is an alkylene of 3 to 6 carbon atoms, each of R⁴³ is independently methoxy, ethoxy or propoxy, subscript y is 1, and subscript z is 0.

Illustrative examples of alkoxysilane include, but are not limited to, methyltrimethoxysilane, methyltriethoxysilane, ethyltrimethoxysilane, ethyltriethoxysilane, ethyltripropoxysilane, n-propyltrimethoxysilane, n-propyltriethoxysilane, n-propyltripropoxysilane, n-propyltributoxysilane, n-butyltrimethoxysilane, iso-butyltrimethoxysilane, n-pentyltrimethoxysilane, n-hexyltrimethoxysilane, iso-octyltriethoxysilane, vinyltrimethoxysilane, vinyltriethoxysilane, phenyltrimethoxysilane, phenyltriethoxysilane, octyltrimethoxysilane, trifluoropropyltrimethoxysilane, 3-aminopropyltrimethoxysilane, 3-mercaptopropyltrimethoxysilane, 3-mercaptopropyltriethoxysilane, 3-glycidoxypropyltrimethoxysilane, 3-glycidoxypropyltriethoxysilane, oligomers and mixtures thereof. Among these, glycidoxypropyltrimethoxysilane is especially advantageous.

The alkoxysilane is typically used in an amount of about 0.01 to 5 parts by weight, based on 100 parts by weight of the silicone composition. For example, the alkoxysilane can be used in an amount of about 0.05 to about 4 parts by weight, and in particular about 0.08 to 3 parts by weight, such as about 0.1 parts by weight, about 0.5 parts by weight, about 1 part by weight, about 1.5 parts by weight, about 2 parts by weight, about 2.5 parts by weight, or about 3 parts by weight, based on 100 parts by weight of the silicone composition.

In an embodiment, the thermally conductive filler is selected from aluminum oxide, zinc oxide, magnesium oxide, aluminum nitride, boron nitride, silicon carbide and silicon dioxide. In a preferred embodiment, the filler includes at least one selected from aluminum oxide and zinc oxide. In an example according to the embodiment, the filler includes both aluminum oxide and zinc oxide.

In a preferred embodiment, the thermally conductive filler comprises aluminum oxides of different particle sizes, for example aluminum oxides having two or more different particle sizes. In an illustrative example, the filler comprises a first aluminum oxide having a first particle size, a second aluminum oxide having a second particle size, and a third aluminum oxide having a third particle size. The first particle size can range from about 0.01 to less than about 0.5 µm; the second particle size can range from about 0.5 µm to less than about 8 µm; and the third particle size can range from about 8 µm to about 100 µm. In an example according to the preferred embodiment, the filler further comprises zinc oxide, such as nano zinc oxide.

In a preferred embodiment, the thermally conductive filler is a hydroxyl-bearing filler due to surface treatment. Without being limited to any theory, it is believed that hydroxyl on the surface of the filler can undergo condensation reaction with the alkoxy functional groups in component (B) under the action of heat released from a heat-generating component that requires heat dissipation, thereby further enhancing the ability of the thermal interface material according to the present invention to withstand long-term high temperature conditions and repeated thermal shocks.

The thermally conductive filler is typically used in an amount of about 50 to 95 parts by weight, based on 100 parts by weight of the silicone composition. For example, the filler can be used in an amount of about 55 to 90 parts by weight, and in particular about 60 to 85 parts by weight, such as about 63 parts by weight, about 65 parts by weight, about 68 parts by weight, about 70 parts by weight, about 75 parts by weight, about 80 parts by weight, or about 85 parts by weight, based on 100 parts by weight of the silicone composition.

The silicone composition can further comprise one or more auxiliary additives as desired. Examples of the auxiliary additives include, but are not limited to, viscosity modifiers, hydrosilylation reaction inhibitors, wetting agents, pigments, and combinations of one or more thereof.

In an embodiment, the viscosity modifiers are selected from silicone oils having a viscosity of about 20 to about 1,000 cp at 25 °C. The silicone oil can be one having a viscosity of about 30 cp to about 800 cp, for example, about 50 cp to about 500 cp, and illustrative examples thereof include, but are not limited to, dimethyl silicone oil, diphenyl silicone oil, methyl phenyl silicone oil, and methyl hydroxy silicone oil. Preferably, these viscosity modifiers are present in an amount of about 1 to about 10 parts by weight, such as about 2 to about 8 parts by weight, and in particular about 3 to about 7 parts by weight, based on 100 parts by weight of the total weight of the silicone composition.

In an embodiment, the hydrosilylation reaction inhibitors are used in combination with component (B-1) having Si-H to improve storage stability of the silicone composition. Illustrative example of the hydrosilylation inhibitors include, but are not limit to, isocyanurates and alkynols. Preferably, these reaction inhibitors are present in an amount of about 0.01 to 2 parts by weight, such as about 0.02 to about 1 part by weight, and in particular about 0.03 to about 0.8 parts by weight, based on 100 parts by weight of the total weight of the composition.

In an embodiment, the wetting agents are selected from hydrolysable polysiloxane compounds having a terminal trialkoxysilyl group, which is linked to the Si atom via an alkylene group of about 2 to about 20 carbon atoms, at one end thereof. Illustrative examples of such wetting agents are described in PCT patent application WO2022187569A1, which is incorporated herein by reference in its entirety. Preferably, these wetting agents are present in an amount of about 0.5 to about 5 parts by weight, such as about 0.8 to about 3 parts by weight, and in particular about 1 to about 2 parts by weight, based on 100 parts by weight of the total weight of the composition.

In an embodiment of the silicone composition, based on 100 parts by weight of the composition, the amount of component (A) is 0.5 to 10 parts by weight, preferably 0.8 to 8 parts by weight, and more preferably 1 to 5 parts by weight; the amount of component (B) is 0.01 to 5 parts by weight, preferably 0.05 to 4 parts by weight, and more preferably 0.08 to 3 parts by weight; the amount of component (C) is 50 to 95 parts by weight, preferably 55 to 90 parts by weight, and more preferably 60 to 85 parts by weight; and the amount of component (D) is 0 to 10 parts by weight, preferably 0.01 to 8 parts by weight, and more preferably 0.1 to 5 parts by weight.

In another aspect, the present invention provides a method for preparing the silicone composition comprising: (a) subjecting the first polyorganosiloxane and the second polyorganosiloxane, in such a ratio that the molar ratio of Si-H of the first polyorganosiloxane to the ethylenically unsaturated group of the second polyorganosiloxane is less than 1, to hydrosilylation reaction in the presence of the hydrosilylation catalyst to prepare the silicone gel (A); and (b) directly blending the prepared silicone gel (A) with component (B), component (C) and optional component (D) to prepare the silicone composition. The reaction conditions for carrying out hydrosilylation are not particularly limited, and can be appropriately selected depending on individual polyorganosiloxanes as used and amounts thereof, as long as the molar ratio of Si-H of the first polyorganosiloxane to the ethylenically unsaturated group of the second polyorganosiloxane is less than 1, to provide residual ethylenically unsaturated group.

In another aspect, the present invention provides a thermal interface material comprising the silicone composition according to the present invention. In an embodiment, the thermal interface material has a thermal conductivity of at least 3 W/mK, such as a thermal conductivity of 3 W/mK to 10 W/mK. The thermal conductivity of the thermal interface material can be, for example, about 3 W/mK, about 4 W/mK, about 5 W/mK, about 6 W/mK, about 7 W/mK, about 8 W/mK, about 9 W/mK, or about 10 W/mK. The thermal interface material according to the present invention can withstand long-term high temperature conditions and repeated thermal shocks, thereby providing excellent long-term reliability. In some preferred embodiments, the thermal interface material according to that present invention is capable of withstanding an elevated temperature of 150°C for more than 1,000 hours. In other preferred embodiments, the thermal interface material is capable of withstanding at least 500, and even more than 1,000 thermal cycling shocks from -40°C to 150°C.

In yet another aspect, the present invention provides an apparatus including a first substrate, a second substrate, and the thermal interface material according to the present invention bridging an interface between the first substrate and the second substrate. Illustrative examples of the apparatus include, but are not limited to, apparatuses requiring heat dissipation, especially electronic apparatuses. Illustrative examples of such electronic apparatuses include, but are not limited to, power amplifiers, transistors, electronic tubes, and CPUs.

In yet another aspect, the present invention provides a method for dissipating heat from a substrate, including contacting the thermal interface material according to the present invention with the substrate. Illustrative examples of the substrate include, but are not limited to, metal substrates, such as aluminum substrates, and copper substrates; plastic substrates, such as polycarbonate substrates, polyester substrates such as polyethylene terephthalate and polybutylene terephthalate substrates, polyamide substrates, polyimide substrates, acrylonitrile-styrene copolymer substrates, styrene-acrylonitrile-butadiene terpolymer substrates, polyvinyl chloride substrates, polyethylene substrates, and any other suitable substrates such as glass substrates.

### Examples

The present invention will be illustrated more specifically with reference to examples, but these examples should not be construed as limiting the scope of the present invention. Moreover, in the following description, unless otherwise specified, "parts" refers to "parts by weight", and viscosity is measured at a temperature condition of 25°C using a Brookfield viscometer.

### Preparation of silicone gel

67.5 parts of vinyl terminated silicone oil M^{Vi}D₁₄₀M^{Vi} and 31.8 parts of vinyl terminated silicone oil M^{Vi}D₃₃₉M^{Vi} were mixed with 0.20 parts of inhibitor triallyl isocyanurate (TAIC) and 0.02 parts of Karstedt catalyst at room temperature. The resulting mixture was warmed to 50°C, and 0.52 parts of MD^{H}₃₃D₂₃M was added, and the reaction was allowed to continue under vacuum for 1 hour. Subsequently, temperature was raised to 90°C, and the reaction was continued until no Si-H was detected. The resulting silicone gel was prepared for later use.

### Preparation of thermal interface materials

The prepared silicone gel was mixed with fillers, wetting agents, alkoxysilanes or polysiloxanes and/or Si-H functional polysiloxanes in the amounts as shown in Table 1 and Table 2 to prepare the thermal interface materials of Examples 1 to 11 (EX1 to EX11) and comparative examples 1 to 5 (CE1 to CE5). The prepared samples of individual examples were pasty, and had viscosities that rendered them to be easily applied to surfaces. The viscosities as shown in Table 1 and Table 2 were measured using a Brookfield viscometer, rotor #7, at 25°C at 2 rpm and 20 rpm, respectively.

**Table 1 (unit: parts)**

| | EX1 | EX2 | EX3 | EX4 | EX5 | EX6 | EX7 | EX8 | EX9 |
|---|---|---|---|---|---|---|---|---|---|
| PDMS¹⁾ | 3.61 | 3.51 | 3.51 | 2.9 | 4.8 | 3.61 | 3.61 | 3.51 | 3.51 |
| silicone gel | 1.8 | 1.8 | 1.8 | 2.5 | 0.5 | 1.8 | 1.8 | 1.8 | 1.8 |
| wetting agent ²⁾ | 1.851 | 1.851 | 1.851 | 1.851 | 1.851 | 1.851 | 1.851 | 1.851 | 1.851 |
| Al₂O₃ ³⁾ | 50.498 | 50.498 | 50.498 | 50.498 | 50.498 | 50.498 | 50.498 | 50.498 | 50.498 |
| Al₂O₃ ⁴⁾ | 16.816 | 16.816 | 16.816 | 16.816 | 16.816 | 16.816 | 16.816 | 16.816 | 16.816 |
| Al₂O₃ ⁵⁾ | 16.816 | 16.816 | 16.816 | 16.816 | 16.816 | 16.816 | 16.816 | 16.816 | 16.816 |
| ZnO ⁶⁾ | 8.408 | 8.408 | 8.408 | 8.408 | 8.408 | 8.408 | 8.408 | 8.408 | 8.408 |
| alkoxysilane 1⁷⁾ | 0.1 | 0 | 0.05 | 0.1 | 0.1 | 0.01 | 0.2 | 0 | 0 |
| pigment ⁸⁾ | 0.1 | 0.1 | 0.1 | 0.1 | 0.1 | 0.1 | 0.1 | 0.1 | 0.1 |
| SiH cross-linking agent ⁹⁾ | 0 | 0.1 | 0.05 | 0 | 0 | 0 | 0 | 0.01 | 0.2 |
| TAIC | 0 | 0.1 | 0.1 | 0 | 0 | 0 | 0 | 0.1 | 0.1 |
| viscosity (cp, 2 rpm) | 1050 | 1150 | 1128 | 1264 | 848 | - | - | - | - |
| viscosity (cp, 20 rpm) | 270 | 280 | 270 | 291.2 | 182.4 | - | - | - | - |

**Table 2 (unit: parts)**

| | CE1 | CE2 | CE3 | CE4 | CE5 | EX10 | EX11 |
|---|---|---|---|---|---|---|---|
| PDMS ¹⁾ | 5.41 | 3.61 | 5.41 | 5.31 | 5.31 | 3.61 | 3.61 |
| silicone gel | 0 | 1.8 | 0 | 0 | 0 | 1.8 | 1.8 |
| wetting agent ²⁾ | 1.851 | 1.851 | 1.851 | 1.851 | 1.851 | 1.851 | 1.851 |
| Al₂O₃³⁾ | 50.498 | 50.498 | 50.498 | 50.498 | 50.498 | 50.498 | 50.498 |
| Al₂O3 ⁴⁾ | 16.816 | 16.816 | 16.816 | 16.816 | 16.816 | 16.816 | 16.816 |
| Al₂O₃ ⁵⁾ | 16.816 | 16.816 | 16.816 | 16.816 | 16.816 | 16.816 | 16.816 |
| ZnO ⁶⁾ | 8.408 | 8.408 | 8.408 | 8.408 | 8.408 | 8.408 | 8.408 |
| alkoxysilane 1⁷⁾ | 0 | 0 | 0.1 | 0 | 0.05 | 0 | 0 |
| alkoxysilane 2¹⁰⁾ | 0 | 0 | 0 | 0 | 0 | 0.1 | 0 |
| alkoxysilane ¹¹⁾ | 0 | 0 | 0 | 0 | 0 | 0 | 0.1 |
| pigment ⁸⁾ | 0.1 | 0.1 | 0.1 | 0.1 | 0.1 | 0.1 | 0.1 |
| SiH cross-linking agent⁹⁾ | 0 | 0 | 0 | 0.1 | 0.05 | 0 | 0 |
| TAIC | 0 | 0 | 0 | 0.1 | 0.1 | 0 | 0 |
| viscosity (cp, 2 rpm) | 720 | 1152 | 640 | 768 | 640 | 1440 | - |
| viscosity (cp, 20 rpm) | 160 | 240 | 128 | 126.4 | 128 | 264 | - |

| | | | | | | | |
|---|---|---|---|---|---|---|---|
| 1) Polydimethylsiloxane having a viscosity of ~100 cP, available from Moment Performance Materials Inc. 2) Silicone polymer with trimethoxysilyl group, which is linked to Si atom via ethylene group, at one end of chain, available from Momentive Performance Materials Inc. 3) Al₂O₃ with a particle size of 7 to 10 µm 4) Al₂O₃ with a particle size of 0.5 µm to 5 µm 5) Al₂O₃ with a particle size of 0.2 to 0.4 µm 6) Nano zinc oxide with a particle size of 80 nm to 120 nm 7) γ-glycidoxypropyltrimethoxysilane 8) Black masterbatch consisting of 50 wt % carbon black and 50 wt % polydimethylsiloxane with a viscosity of 3,000 cP 9) Linear polysiloxane comprising side-attached Si-H, wherein the content of Si-H is 2.8 mmol/g, and viscosity is 100 cP 10) γ-glycidoxypropyltriethoxysilane 11) Polydimethylsiloxane having a viscosity of ~100 cP, which is blocked by dimethoxymethylsilyl at both ends, available from Momentive Performance Materials Inc. | | | | | | | |

Preparation of thermal interface materials CE6 to CE8 for comparative examples Examples EX1 to EX3 were repeated except that 1.8 parts of silicone gel was replaced with the raw materials used to prepare the 1.8 parts of silicone gel, namely two vinyl terminated silicone oils, inhibitor TAIC, Karstedt catalyst and MD^{H}₃₃D₂₃M. As a result, thermal interface materials CE6 to CE8 for comparative examples were obtained, which had viscosities of 1,168 cp, 1,136 cp and 1,136 cp at 2 rpm, and viscosities of 249.6 cp, 249.6 cp and 244.8 cp at 20 rpm, respectively.

### Reliability evaluation of thermal interface materials

The thermal interface materials prepared for each example and comparative example were applied between an aluminum plate and a glass plate, with a space of 0.1 mm. Thus-prepared samples were placed vertically, and subjected to the following two accelerated aging experiments to evaluate their reliability.

Reliability evaluation 1: each of the prepared samples was placed at 150°C for 1,000 hours; and
Reliability evaluation 2: each of the prepared samples was subjected to a thermal shock from -40°C to 150 °C for 1,000 times.

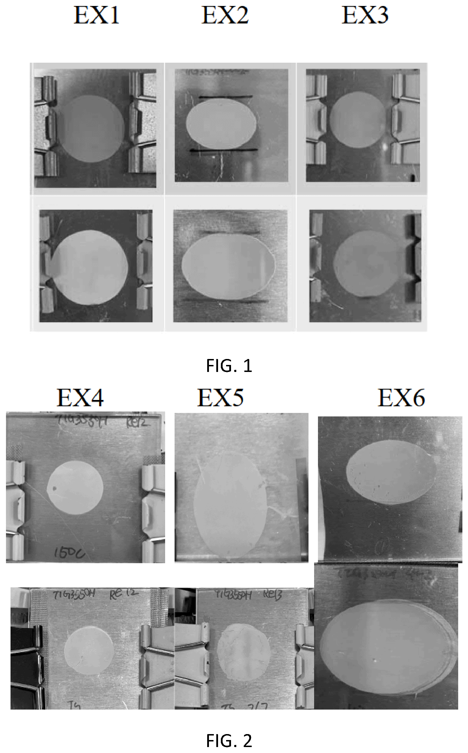

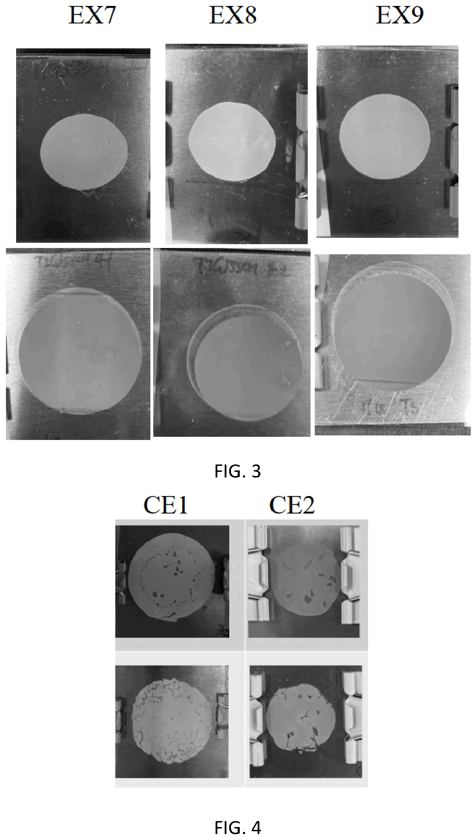

The evaluation results were shown in FIGS. 1 to 7.

As shown in the figures, the example samples EX1 to EX11 according to the present invention all had excellent reliability, and after being placed at a high temperature of 150 °C for a long time or under repeated thermal shocks, all of them did not show cracks that would affect uses or even did not show any crack (such as example samples EX1 to EX3), and did not show visible vertical slippages. In contrast, all of the samples CE1 to CE5 for comparative examples, which lacked (A) silicone gel and (B) at least one of the silicon-containing compounds selected from the polyorganosiloxane having Si-H and/or alkoxy functional groups and the alkoxysilanes, exhibited unacceptable cracks that would affect practical uses after accelerated aging.

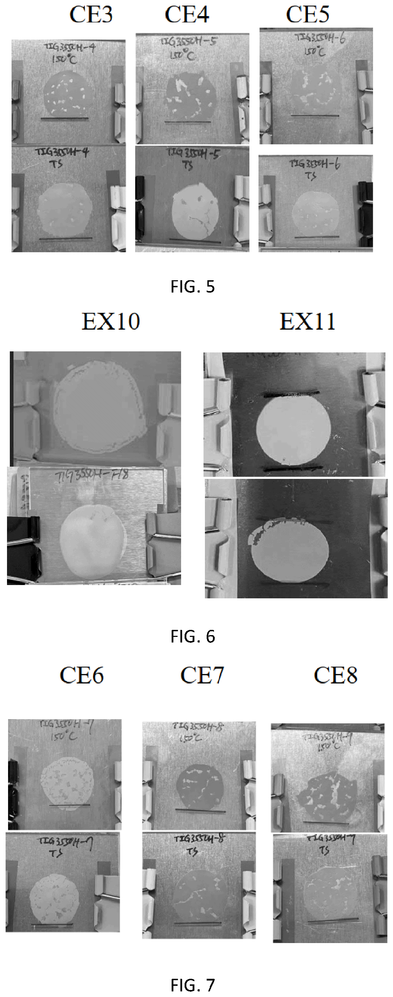

Moreover, samples CE6 to CE8 for comparative samples, which were prepared using similar raw materials to the example samples, also exhibited unacceptable cracks after accelerated aging, as shown in FIG. 7. This showed that if the raw materials for preparing silicone gels were directly used as reactants for preparing the thermal interface materials without any pre-curing, problems such as cracks during aging could not be solved, either.

While the disclosure has been described with reference to preferred embodiments, it will be understood by those skilled in the art that various changes can be made and elements thereof can be substituted with equivalents without departing from the scope of the disclosure. In addition, various modifications can be made to adapt a particular situation or material to the teachings of the disclosure without departing from essential scope thereof. Therefore, it is intended that the disclosure not be limited to the particular embodiments disclosed as the best mode contemplated for carrying out this disclosure, but that the disclosure will cover all embodiments falling within the appended claims.

## Claims

1. A silicone composition comprising:
(A) a silicone gel, which is prepared by subjecting at least one first polyorganosiloxane having Si-H and at least one second polyorganosiloxane having an ethylenically unsaturated group, in such a ratio that the molar ratio of Si-H of the first polyorganosiloxane to the ethylenically unsaturated group of the second polyorganosiloxane is less than 1, to hydrosilylation reaction in the presence of a hydrosilylation catalyst;
(B) at least one silicon-containing compound selected from: (B-1) a third polyorganosiloxane having at least one of Si-H and alkoxy functional groups, and (B-2) an alkoxysilane;
(C) a thermally conductive filler; and
(D) optionally, one or more auxiliary additives.

2. The silicone composition according to claim 1, wherein the first polyorganosiloxane has a structure of general formula (I):
M¹ₐM^{H}_{b}D¹_{c}D^{H}_{d}T¹ₑT^{H}_{f}Q_{g} general formula (I)
wherein
M¹=R¹¹R¹²R¹³SiO_{1/2};
M^{H}=R¹⁴R¹⁵HSiO_{1/2};
D¹=R¹⁶R¹⁷SiO_{2/2};
D^{H}=R¹⁸HSiO_{2/2};
T¹=R¹⁹SiO_{3/2};
T^{H}=HSiO_{3/2};
Q=SiO_{4/2}
wherein R¹¹, R¹², R¹³, R¹⁴, R¹⁵, R¹⁶, R¹⁷, R¹⁸ and R¹⁹ are each independently an optionally substituted monovalent hydrocarbon group of up to 60 carbon atoms, preferably a monovalent hydrocarbon group of 1 to 30 carbon atoms, and more preferably an alkyl group of 1 to 12 carbon atoms; and subscripts a, b, c, d, e, f and g satisfy: 0≤a≤50, 0≤b≤50, 0≤c≤500, 0≤d≤500, 0≤e≤100, 0≤f≤100, 0≤g≤30, b+d+f≥2, and a+b+c+d+e+f+g≤1000;
preferably, the first polyorganosiloxane is selected from the following general formula (I): wherein R¹¹, R¹², R¹³, R¹⁴, R¹⁵, R¹⁶, R¹⁷, R¹⁸ and R¹⁹ are each independently an alkyl group of 1 to 6 carbon atoms, e, f and g are 0, a+b=2, 10≤c≤200, and 10≤d≤100;
more preferably, the first polyorganosiloxane is selected from the following general formula (I): wherein R¹¹, R¹², R¹³, R¹⁴, R¹⁵, R¹⁶, R¹⁷, R¹⁸ and R¹⁹ are each independently an alkyl group of 1 to 4 carbon atoms, e, f and g are 0, a+b=2, 10≤c≤100, and 10≤d≤50.

3. The silicone composition according to claim 1 or 2, wherein the second polyorganosiloxane has a structure of the following general formula (II):
M²ₕM^{V}ᵢD²ⱼD^{V}ₖT²ₗT^{V}ₘQₙ general formula (II)
wherein
M²=R²¹R²²R²³SiO_{1/2};
M^{V}=R²⁴R²⁵R^{V}SiO_{1/2};
D²=R²⁶R²⁷SiO_{2/2};
D^{V}=R²⁸R^{V}SiO_{2/2};
T²=R²⁹SiO_{3/2};
T^{V}=R^{V}SiO_{3/2};
Q=SiO_{4/2}
wherein
wherein R²¹, R²², R²³, R²⁴, R²⁵, R²⁶, R²⁷, R²⁸ and R²⁹ are each independently an optionally substituted monovalent hydrocarbon group of up to 60 carbon atoms, preferably a monovalent hydrocarbon group of 1 to 30 carbon atoms, and more preferably an alkyl group of 1 to 12 carbon atoms; each of R^{V} is independently an ethylenically unsaturated group of 2 to 30 carbon atoms, preferably an alkenyl group or an alkynyl group of 2 to 20 carbon atoms, and more preferably an alkenyl group of 2 to 8 carbon atoms; and subscripts h, i, j, k, l, m and n satisfy: 0≤h≤50, 0≤i≤50, 0≤j≤1000, 0≤k≤1000, 0≤l≤100, 0≤m≤100, 0≤n≤30, i+k+m ≥ 2, and h+i+j+k+l+m+n≤2000;
preferably, the second polyorganosiloxane is selected from the following general formula (II): wherein R²¹, R²², R²³, R²⁴, R²⁵, R²⁶, R²⁷, R²⁸ and R²⁹ are each independently an alkyl group of 1 to 6 carbon atoms; each of R^{V} is independently an alkenyl group or an alkynyl group of 2 to 20 carbon atoms; and l, m and n are 0, h+i=2, 0≤k≤20, and 10≤j≤800;
more preferably, the second polyorganosiloxane is selected from the following general formula (II): wherein R²¹, R²², R²³, R²⁴, R²⁵, R²⁶, R²⁷, R²⁸ and R²⁹ are each independently an alkyl group of 1 to 4 carbon atoms; each of R^{V} is independently an alkenyl group of 2 to 8 carbon atoms; k, l, m and n are 0, i=2, and 100≤j≤500.

4. The silicone composition according to any one of claims 1 to 3, wherein the third polyorganosiloxane has a structure of general formula (III):
M³ₒM^{H}ₚM^{AO}_{q}D³ᵣD^{H}ₛD^{AO}ₜT³ᵤT^{H}ᵥT^{AO}_{w}Qₓ general formula (III)
wherein
M³=R³¹R³²R³³SiO_{1/2};
M^{AO}=R³⁴R³⁵R^{AO}SiO_{1/2};
D³=R³⁶R³⁷SiO_{2/2};
D^{AO}=R³⁸R^{AO}SiO_{2/2};
T¹=R³⁹SiO_{3/2};
T^{AO}=R^{AO}SiO_{3/2};
Q=SiO_{4/2}
M^{H}, D^{H} and T^{H} are the same as defined above for general formula (I),
wherein R¹⁴, R¹⁵, R¹⁸, R³¹, R³², R³³, R³⁶, R³⁷ and R³⁹ are each independently an optionally substituted monovalent hydrocarbon group of up to 60 carbon atoms, preferably a monovalent hydrocarbon group of 1 to 30 carbon atoms, and more preferably an alkyl group of 1 to 12 carbon atoms; R³⁴, R³⁵ and R³⁸ are each independently R^{AO} or an optionally substituted monovalent hydrocarbon group of up to 60 carbon atoms, preferably R^{AO} or a monovalent hydrocarbon group of 1 to 30 carbon atoms, and more preferably R^{AO} or an alkyl group of 1 to 12 carbon atoms; each of R^{AO} is independently an alkoxy of 1 to 12 carbon atoms, preferably an alkoxy of 1 to 6 carbon atoms, and more preferably an alkoxy of 1 to 4 carbon atoms; and subscripts o, p, q, r, s, t, u, v, w and x satisfy: 0≤o≤50, 0≤p≤50, 0≤q≤50, 0≤r≤500, 0≤s≤500, 0≤t≤500, 0≤u≤100, 0≤v≤100, 0≤w≤100, 0≤x≤30, p+s+v+q+t+w ≥ 2, and o+p+q+r+s+t+u+v+w+x≤1000;
preferably, the third polyorganosiloxane is selected from the polyorganosiloxane having Si-H of the following general formula (III): wherein R¹⁴, R¹⁵, R¹⁸, R³¹, R³², R³³, R³⁴, R³⁵, R³⁶, R³⁷, R³⁸ and R³⁹ are each independently an alkyl group of 1 to 6 carbon atoms, q, t, u, v, w and x are 0, o+p=2, 10≤r≤200, and 10≤s≤100; the polyorganosiloxane having an alkoxy functional group of the following general formula (III): wherein R¹⁴, R¹⁵, R¹⁸, R³¹, R³², R³³, R³⁴, R³⁶, R³⁷, R³⁸ and R³⁹ are each independently an alkyl group of 1 to 6 carbon atoms, R³⁵ and R^{AO} are alkoxy groups of 1 to 4 carbon atoms, o, p, s, t, u, v, w, and x are 0, q=2, and 10≤r≤200; or a combination thereof;
more preferably, the third polyorganosiloxane is selected from the following general formula (III): wherein R¹⁴, R¹⁵, R¹⁸, R³¹, R³², R³³, R³⁴, R³⁵, R³⁶, R³⁷, R³⁸ and R³⁹ are each independently an alkyl group of 1 to 4 carbon atoms, q, t, u, v, w and x are 0, o+p=2, 10≤r≤100, and 10≤s≤50.

5. The silicone composition according to any one of claims 1 to 4, wherein the alkoxysilane has a structure of the following general formula (IV):
(X-R⁴¹)_{y}Si(R⁴²)_{z}(OR⁴³)_{4-(y+z)} general formula (IV)
wherein, X is an organic functional group;
each of R⁴¹ is independently a divalent hydrocarbon group of 1 to 12 carbon atoms optionally comprising one or more heteroatoms;
each of R⁴² is independently an alkyl of 1 to 16 carbon atoms;
each of R⁴³ is independently an alkyl of 1 to 6 carbon atoms;
subscript y is 0 or 1, subscript z is 0, 1 or 2, and y+z is 0, 1 or 2;
preferably, the alkoxysilane is selected from the following general formula (IV):
wherein X is selected from glycidyloxy, epoxy, amino, amido, acyloxy and ureido, R⁴¹ is an alkylene of 3 to 12 carbon atoms, R⁴² is an alkyl of 1 to 12 carbon atoms,
each of R⁴³ is independently an alkyl of 1 to 4 carbon atoms, subscript y is 1, and subscript z is 0 or 1;
more preferably, the alkoxysilane is selected from the following general formula (IV): wherein X is selected from glycidyloxy, epoxy, amino and amido, R⁴¹ is an alkylene of 3 to 6 carbon atoms, each of R⁴³ is independently methoxy, ethoxy or propoxy, subscript y is 1, and subscript z is 0.

6. The silicone composition according to any one of claims 1 to 5, wherein the filler is selected from aluminum oxide, zinc oxide, magnesium oxide, aluminum nitride, boron nitride, silicon carbide and silicon dioxide; preferably, the filler is selected from aluminum oxide and zinc oxide.

7. The silicone composition according to any one of claims 1 to 6, wherein the auxiliary additive is selected from one or more of viscosity modifiers, hydrosilylation reaction inhibitors, wetting agents and pigments.

8. The silicone composition according to claim 7, wherein the viscosity modifiers are selected from silicone oils having a viscosity of 20 to 1,000 cp at 25 °C; preferably, these viscosity modifiers are present in an amount of 1 to 10 parts by weight, based on 100 parts by weight of the total weight of the composition.

9. The silicone composition according to claim 7, wherein the hydrosilylation reaction inhibitors are used in combination with component (B-1), and are selected from isocyanurates and alkynols; preferably, these inhibitors are present in an amount of 0.01 to 2 parts by weight, based on 100 parts by weight of the total weight of the composition.

10. The silicone composition according to any one of claims 1 to 9, wherein the molar ratio of Si-H of the first polyorganosiloxane to the ethylenically unsaturated group of the second polyorganosiloxane is 0.05:1 to 0.9:1, preferably 0.1:1 to 0.8:1, and more preferably 0.15:1 to 0.7:1.

11. The silicone composition according to any one of claims 1 to 10, wherein the silicone gel has an ethylenically unsaturated group in an amount of 0.01 to 0.30 mmol per 1 g of gel, preferably 0.02 to 0.25 mmol per 1 g of gel, and more preferably 0.05 to 0.20 mmol per 1 g of gel.

12. The silicone composition according to any one of claims 1 to 11, wherein based on 100 parts by weight of the composition, component (A) is 0.5 to 10 parts by weight, preferably 0.8 to 8 parts by weight, and more preferably 1 to 5 parts by weight; component (B) is 0.01 to 5 parts by weight, preferably 0.05 to 4 parts by weight, and more preferably 0.08 to 3 parts by weight; component (C) is 50 to 95 parts by weight, preferably 55 to 90 parts by weight, and more preferably 60 to 85 parts by weight; and component (D) is 0 to 10 parts by weight, preferably 0.01 to 8 parts by weight, and more preferably 0.1 to 5 parts by weight.

13. A method for preparing the silicone composition according to any one of claims 1 to 12, including:
(a) subjecting the first polyorganosiloxane and the second polyorganosiloxane, in such a ratio that the molar ratio of Si-H of the first polyorganosiloxane to the ethylenically unsaturated group of the second polyorganosiloxane is less than 1, to hydrosilylation reaction in the presence of the hydrosilylation catalyst to prepare the silicone gel (A); and
(b) directly blending the prepared silicone gel (A) with component (B), component (C) and optional component (D) to prepare the silicone composition.

14. A thermal interface material comprising the silicone composition according to any one of claims 1 to 12.

15. An apparatus including a first substrate, a second substrate, and the thermal interface material according to claim 14 bridging an interface between the first substrate and the second substrate.

16. A method for preparing the apparatus according to claim 15, including applying the silicone composition according to any one of claims 1 to 12 to at least one of the first substrate and the second substrate.

17. A method for dissipating heat from a substrate, including contacting the thermal interface material according to claim 14 with the substrate.
